# EUROPEAN PATENT SPECIFICATION

(11) **EP 3 190 022 B1**
(45) Date of publication and mention of the grant of the patent: **29.08.2018**
(21) Application number: 16205817.6
(22) Date of filing: 21.12.2016
(51) Int. Cl.: B60W 30/12

(54) **LANE EXTENSION FOR VISION STEERED AUTOMATED VEHICLE**
FAHRSPURERWEITERUNG FÜR SICHTGELENKTES AUTOMATISCHES FAHRZEUG
EXTENSION DE VOIE POUR VÉHICULE AUTOMATISÉ GUIDÉ PAR LA VISION

(30) Priority: 11.01.2016 US 201614992459
(43) Date of publication of application: 12.07.2017
(73) Proprietor: Delphi Technologies, Inc., Troy, MI 48007-5052 (US)
(72) Inventor: CHIA, Michael I., Cicero, Indiana 46034 (US); SMITH, Matthew R., Springboro, Ohio 45066 (US); KOSIAK, Walter K., Kokomo, Indiana 46902 (US)
(74) Representative: Robert, Vincent

(56) References cited:
- WO-A1-2015/156821
- DE-A1-102013 003 216
- DE-A1-102013 220 487
- US-A1- 2014 379 164
- US-A1- 2014 379 247

## Description

### TECHNICAL FIELD OF INVENTION

The invention relates to a lane-extension system suitable for use on an automated vehicle, and more particularly relates to a system that operates the vehicle in accordance with a present-trajectory previously defined by the vision-path when a vision-path determined from a camera image does not correspond to a digital-map.

### BACKGROUND OF INVENTION

It is known to operate, e.g. steer, an automated vehicle using a camera to detect features of a roadway such as lane-markings and curbs. However, in some instances those features may be inconsistent, degraded, or otherwise unavailable. Examples of these instances include, but are not limited to intersections, hill crests, diverging lane markers, exit ramps, poorly marked lanes, and/or incorrectly detected vision markers. Using digital maps such as electronic Horizon (eH) or general purpose global positioning systems have been suggested, but such digital-maps require undesirable frequent updates to remain consistent with what the camera may detect.

US 2014/379164 A1 discloses an apparatus for a vehicle operated on a roadway having lane markers comprising an optical sensor providing optical data of the roadway. A first lane model is stored in an electronic memory in response to detected lane markers in the optical data. An electronic horizon system tracks a position of the vehicle and provides roadway data in response to the position. A second lane model is stored in the electronic memory in response to the roadway data. A confidence checker compares a discrepancy between the first and second lane models to a threshold in order to determine a confidence level. An output selector selects the first lane model when lane markers are detected in the optical data, and selects the second lane model if the lane markers are not detected in the optical data and the confidence level is greater than a predetermined level.

### SUMMARY OF THE INVENTION

In accordance with the invention, a lane-extension system suitable for use on an automated vehicle is provided. The system includes a camera, a location-device, and a controller. The camera is used to capture an image of a roadway traveled by a host-vehicle. The location-device is used to determine a location of the host-vehicle on a digital-map. The controller is in communication with the camera and the location-device. The controller is configured to determine a vision-path based on a lane-marking of the roadway detected in the image, operate the host-vehicle in accordance with the vision-path when the vision-path does correspond to the digital-map, and operate the host-vehicle in accordance with a present-trajectory previously defined by the vision-path when the vision-path does not correspond to the digital-map.

Advantageously, operation of the host-vehicle by the system in accordance with the present-trajectory is done without reference to the digital-map.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a lane-extension system in accordance with one embodiment;
Fig. 2 is a traffic scenario experienced by the system of Fig. 1 in accordance with one embodiment;
Fig. 3 is a traffic scenario experienced by the system of Fig. 1 in accordance with one embodiment; and
Fig. 4 is a traffic scenario experienced by the system of Fig. 1 in accordance with one embodiment.

### DETAILED DESCRIPTION

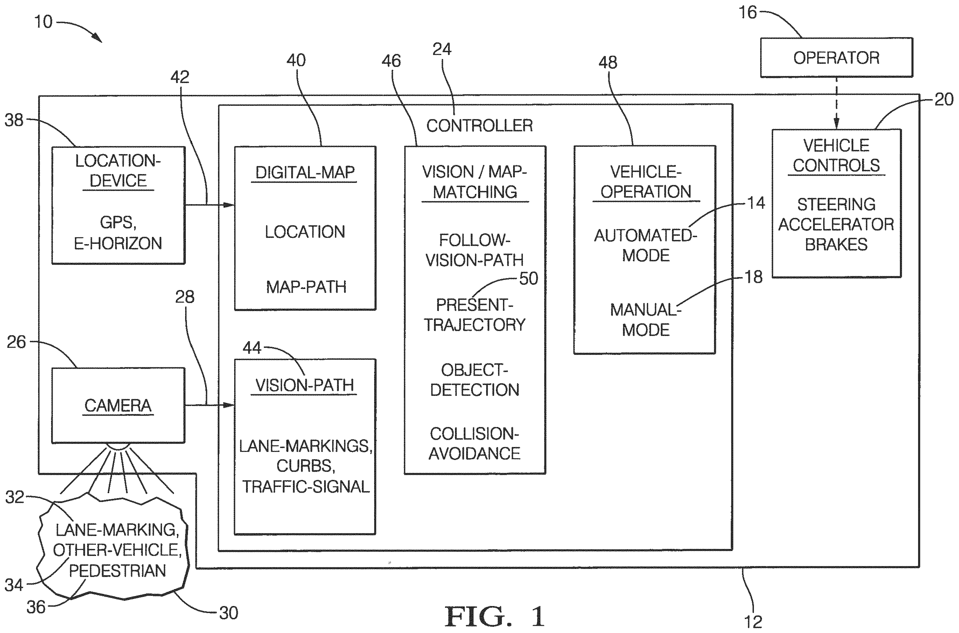

Fig. 1 illustrates a non-limiting example of a lane-extension system 10, hereafter referred to as the system 10, suitable for use on an automated vehicle, hereafter referred to as the host-vehicle 12. In general, the system 10 is configured to operate (i.e. drive) the host-vehicle 12 in an automated-mode 14 whereby an operator 16 of the host-vehicle 12 is little more than a passenger. That is, the operator 16 is not substantively involved with the steering or operation of the accelerator and brakes of the host-vehicle 12. It is contemplated that the host-vehicle 12 may also be operated in a manual-mode 18 where the operator 16 is fully responsible for operating the vehicle-controls 20, or in a partial-mode (not shown) where control of the vehicle is shared by the operator 16 and a controller 24 of the system 10.

The controller 24 may include a processor (not specifically shown) such as a microprocessor or other control circuitry such as analog and/or digital control circuitry including an application specific integrated circuit (ASIC) for processing data as should be evident to those in the art. The controller 24 may include memory (not specifically shown), including non-volatile memory, such as electrically erasable programmable read-only memory (EEPROM) for storing one or more routines, thresholds, and captured data. The one or more routines may be executed by the processor to perform steps for operating the host-vehicle 12 based on signals received by the controller 24 as described herein.

The system 10 includes a camera 26 used to capture an image 28 of a roadway 30 traveled by a host-vehicle 12. The image 28 may include, but is not limited to, a lane-marking 32, an other-vehicle 34, and/or a pedestrian 36 on or proximate to the roadway 30. Examples of the camera 26 suitable for use on the host-vehicle 12 are commercially available as will be recognized by those in the art. The camera 26 may be mounted on the front of the host-vehicle 12, or mounted in the interior of the host-vehicle at a location suitable for the camera to view the area around the host-vehicle 12 through the windshield of the host-vehicle 12.

The system 10 includes a location-device 38 used to determine a location 42 of the host-vehicle 12 on a digital-map 40. The location-device 38 may be comparable to those used in a global positioning system (GPS) and/or an electronic-Horizon type of system. The location 42 may be expressed in, for example, global coordinates which correspond to a particular location on the digital-map 40. Alternatively, the location 42 may be expressed as a distance and direction to one or more ground-based transponders arranged along the roadway 30. Some prior systems rely on various forms of digital-maps that describe or model the driving environment (i.e. the roadway 30) in extensive detail so a vehicle could theoretically be operated using a high-precision version of the location-device and without any other information such as the image 28. As will become apparent in the description that follows, the digital-map 40 used by the system 10 described herein only provides a relatively low level of detail about the roadway 30 such as the shape of the roadway 30 forward of the host-vehicle, e.g. indicates that the roadway 30 is straight or curved.

The controller 24 is in electrical communication with the camera 26 and the location-device 38 so the controller 24 can receive the image 28 and the location 42 from the respective devices. The controller 24 is generally configured to process the image 28 using image-processing algorithms known to those in the art to determine a vision-path 44 based on, but not limited to, the lane-marking 32 of the roadway 30 detected or present in the image 28. As used herein, the vision-path 44 defines a path along the roadway 30 that the controller 24 follows during operation of the hose-vehicle in the automated-mode 14 which controls the steering, accelerator, and/or brakes of the vehicle-controls 20 of the host-vehicle 12. That is, it is the image 28 that is used by the system 10 to determine how the vehicle-controls 20 are operated to drive the host-vehicle 12.

As will become apparent in the description that follows, the system 10 described herein has an advantage over prior systems that rely on other means such as high-definition digital-map databases and costly high-precision global-positioning devices to operate the host-vehicle 12. That is, the system 10, or more specifically the controller 24 is configured to operate the host-vehicle 12 in accordance with or along the vision-path 44 when the vision-path 44 does correspond to the digital-map. In other words, as long as the image 28 is sufficient to provide a vision-path 44 that does not disagree with the digital-map 40, a vision/map matching logic 46 in the controller 24 selects a follow-vision-path option and follows the vision-path 44.

In contrast to prior systems that have incurred the cost and complication to provide the means to operate a vehicle without the benefit of the image 28, the controller 24 described herein is configured to operate the host-vehicle 12 in accordance with a present-trajectory 50 previously defined by the vision-path 44 when the vision-path 44 does not correspond to the digital-map 40. That is, if the image 28 is not sufficient to determine that the vision-path 44 and the digital-map 40 indicate the same shape for the roadway 30, or the shape of the roadway 30 indicated by the vision-path 44 and the digital-map 40 disagree, i.e. that the vision-path 44 and the digital-map 40 do not correspond, then the system 10 simply continues steers the host-vehicle 12 in the same manner, e.g. along the same path of curvature or in a straight line (the present-trajectory 50), at least temporarily until the image 28 again becomes sufficient to determine the vision-path 44 that corresponds to the digital-map 40.

How long or far the system 10 will operate the host-vehicle 12 in accordance with the present-trajectory 50 without taking some secondary action will depend on a variety of factors such as, but not limited to, the operational status of the camera 26, the speed of the host-vehicle 12, the degree/length of time that the vision-path 44 and the digital-map 40 did correspond prior to the condition when the vision-path 44 does not correspond to the digital-map 40, and/or the detection of some object in the pathway of the host-vehicle 12. It is emphasized that in contrast to prior systems, the system 10 described herein has a cost and complexity advantage over the prior systems because the operation of the host-vehicle 12 in accordance with the present-trajectory 50 is done without reference to the digital-map 40.

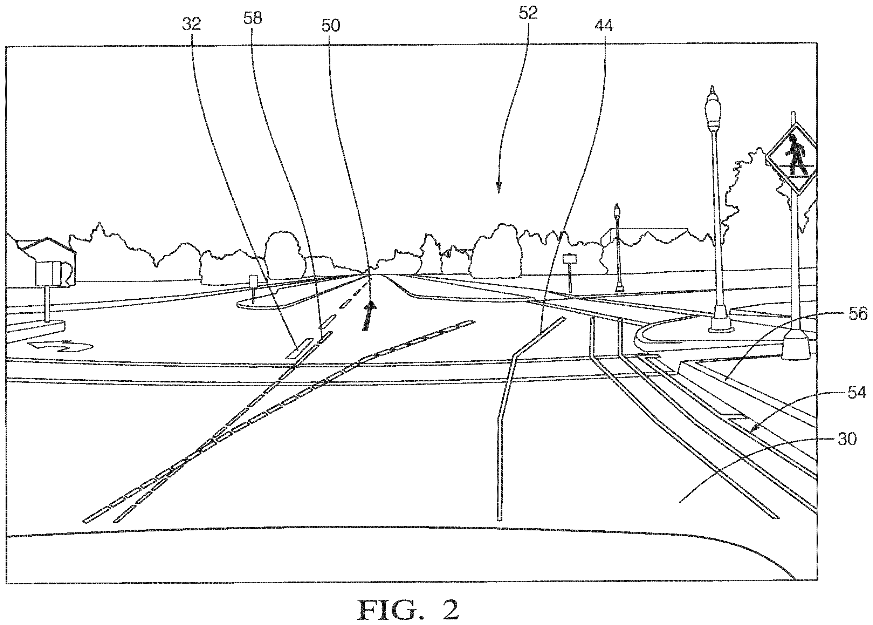

Fig. 2 illustrates a non-limiting example of an intersection 52 of the roadway 30 that has been observed to cause a steering confidence problem for vision-only based systems that operate automated vehicles. It has also been observed that new turn lanes and exit ramps cause similar problems. Because the right-edge marking 54 provided by the curb 56 diverges from the left-edge marking 58 provided by the center-line of the roadway 30, the vision-path 44 may veer away from the present-trajectory 50 which corresponds to the digital-map 40 that indicates that the roadway 30 is straight. This is an example of where the vision-path 44 does not correspond to the digital-map 40 when the lane-marking 32 is not detected because the lane-marking 32 does not extend through the intersection 52. To overcome this problem, the controller 24 merely steers the host-vehicle 12 in the present-trajectory 50, straight-ahead in this example, and does so not because the digital-map 40 indicates that the roadway 30 is straight, but because it is presumed that sufficient features will again be detected by going straight so that the vision-path 44 and the digital-map 40 will again correspond.

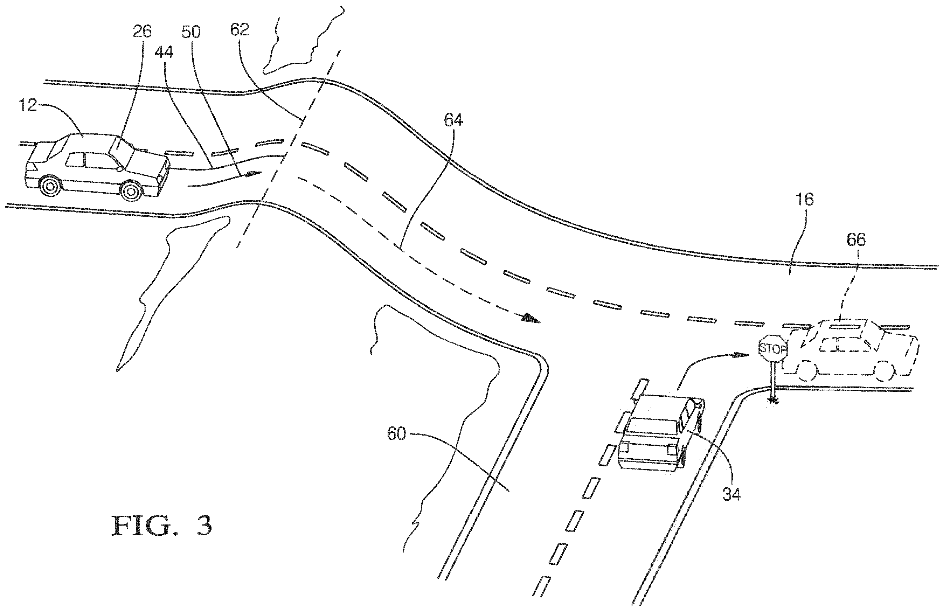

Fig. 3 illustrates another non-limiting example of the roadway 30 that may cause the vision-path 44 to not correspond to the digital-map 40. In this example the roadway 30 includes a side-road 60 traveled by the other-vehicle 34. The roadway 30 includes a hill-crest 62 that prevents the camera 26 from seeing the roadway 30 beyond the hill-crest 62. In this instance the vision-path 44 indicates that the roadway 30 stops at the hill-crest 62, but the digital-map 40 indicates that the roadway 30 is present beyond the hill-crest. As such, the vision-path 44 does not correspond to the digital-map 40. As with the previous situation shown in Fig. 2, the controller 24 merely steers the host-vehicle 12 in accordance with the present-trajectory 50, and does so not because the digital-map 40 indicates that the roadway 30 is present, but because it is presumed that sufficient features will again be detected by going straight so that the vision-path 44 and the digital-map 40 will again correspond.

The controller 24 may be further configured to operate the host-vehicle 12 in accordance with the present-trajectory 50 when the vision-path 44 does not correspond to the digital-map 40 until an object 66 (e.g. the other-vehicle 34 after completing the indicated turn) is detected in a travel-path 64 of the host-vehicle 12. As used herein, the travel-path 64 is the path that the host-vehicle 12 will eventually follow using the system 10 described herein. After the host-vehicle 12 passes the hill-crest 62 it may take a moment for the controller 24 to again determine a vision-path 44 that corresponds to the digital map 40 so the host-vehicle 12 continues to travel in accordance with the present-trajectory 50. However, if the other-vehicle 34 executes the turn suggested in Fig. 3 and as a result is in the travel-path 64, then the controller 24 may take some action to prevent a collision with the other-vehicle 34 even though the vision-path 44 may not yet correspond to the digital-map 40. Other non-limiting examples of the object 66 include the pedestrian 36 (not shown in Fig. 3) crossing the travel-path 64, or debris (not shown in Fig. 3) on the roadway 30 in the travel-path 64.

As suggested above, the controller 24 may be further configured to operate the host-vehicle 12 to avoid a collision with the object 66 detected in the travel-path 64 of the host-vehicle 12. To avoid a collision, the controller 24 may, for example, apply the brakes of the host-vehicle 12, and/or operate the steering to steer the host-vehicle 12 into another lane or onto a shoulder of the roadway 30. That is, the host-vehicle 12 may stop, slow-down, and/or steer away from the travel-path 64 when an object 66 (the other-vehicle 34) is detected in the travel-path, and thereby not continue to travel in accordance with the present-trajectory 50.

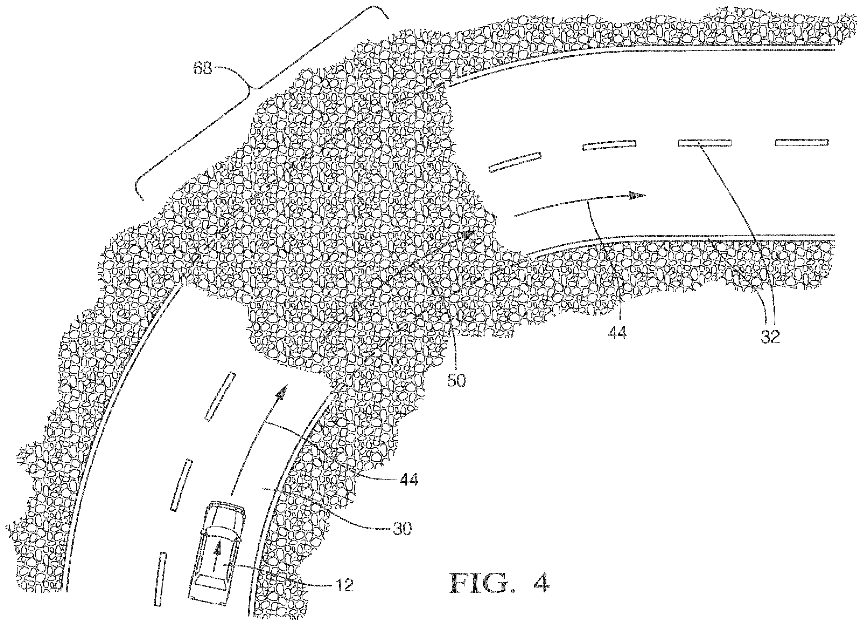

Fig. 4 illustrates another non-limiting example of the roadway 30 that may cause the vision-path 44 to not correspond to the digital-map 40. In this example the roadway 30 includes a construction-zone 68 where a portion of the roadway 30 does not have any visual cues such as a lane-marking, curb, or pavement edge that the controller 24 could use to determine the vision-path 44. As such, the vision-path 44 does not correspond to the digital-map 40. In contrast with the previous situations shown in Figs. 2 and 3 where the controller 24 merely steers the host-vehicle 12 in a straight-direction when the vision-path 44 does not correspond to the digital-map 40, in this non-limiting example the roadway 30 is curved, so the vision-path 44 is curved prior to the point where the construction-zone 68 starts. As such, the present-trajectory 50 previously defined by the vision-path 44 is also curved. The host-vehicle 12 follows the present-trajectory 50 by fixing or maintaining the steering-wheel angle of the host-vehicle 12 that was being used at the point where the construction-zone 68 starts, i.e. at the point where the vision-path 44 does not correspond to the digital-map 40. By maintaining the steering-wheel angle, the host-vehicle follows the present-trajectory 50, and does so not because the digital-map 40 indicates that the roadway 30 resumes beyond the construction-zone 68, but because it is presumed that sufficient features will again be detected by continuing to turn the host-vehicle 12 at the same radius of curvature so that the vision-path 44 and the digital-map 40 will again correspond. After traveling in accordance with the present-trajectory 50, sufficient visual cues are detected, and the controller 24 is configured to resume operation of the host-vehicle 12 in accordance with the vision-path 44 when detection of the lane-marking 32 resumes so that the vision-path 44 and the digital-map 40 will again correspond.

Accordingly, a lane-extension system (the system 10), a controller 24 for the system 10, and a method of operating the system is provided. In contrast to prior systems, the system 10 described herein is less costly and less complex when compared to the prior systems because the system 10 merely steers the host-vehicle 12 in accordance with the present-trajectory 50 (e.g. continue along present curved or straight path) when the image 28 from the camera 26 is inadequate to determine a vision-path 44 that corresponds to the digital map 40. Steering in accordance with the present-trajectory 50 is done without reference to the digital-map 40, and is expected to continue until the image 28 again becomes sufficient to determine the vision-path 44 that corresponds to the digital-map 40, or an object 66 in the travel-path 64 of the host-vehicle 12 needs to be avoided to prevent a collision.

While this invention has been described in terms of the preferred embodiments thereof, it is not intended to be so limited, but rather only to the extent set forth in the claims that follow.

## Claims

1. A lane-extension system (10) suitable for use on an automated vehicle, said system (10) comprising:
a camera (26) used to capture an image (28) of a roadway (30) traveled by a host-vehicle (12);
a location-device (38) used to determine a location (42) of the host-vehicle (12) on a digital-map (40); and
a controller (24) in communication with the camera (26) and the location-device (38), said controller (24) configured to determine a vision-path (44) based on a lane-marking (32) of the roadway (30) detected in the image (28),
operate the host-vehicle (12) in accordance with the vision-path (44) when the vision-path (44) does correspond to the digital-map (40); **characterized in that** the controller is further configured to operate the host-vehicle (12) in accordance with a present-trajectory (50) previously defined by the vision-path (44) when the vision-path (44) does not correspond to the digital-map (40).

2. The system (10) in accordance with claim 1, wherein operation of the host-vehicle (12) in accordance with the present-trajectory (50) is done without reference to the digital-map (40).

3. The system (10) in accordance with claim 1 or 2, wherein the vision-path (44) does not correspond to the digital-map (40) when the lane-marking (32) is not detected.

4. The system (10) in accordance with any one of claims 1 to 3, wherein the controller (24) is further configured to operate the host-vehicle (12) in accordance with the present-trajectory (50) when the vision-path (44) does not correspond to the digital-map (40) until an object (66) is detected in a travel-path (64) of the host-vehicle (12).

5. The system (10) in accordance with claim 4, wherein the controller (24) is further configured to operate the host-vehicle (12) to avoid a collision with the object (66) detected in the travel-path (64) of the host-vehicle (12).

6. The system (10) in accordance with any one of the preceding claims in combination with claim 3, wherein the controller (24) is further configured to resume operation of the host-vehicle (12) in accordance with the vision-path (44) when detection of the lane-marking (32) resumes.

## Patentansprüche

1. Fahrspurerweiterungssystem (10), das zur Verwendung in einem automatisierten Fahrzeug geeignet ist, wobei das System (10) aufweist:
eine Kamera (26), die zum Aufnehmen eines Bildes (28) einer Fahrbahn (30) verwendet wird, die von einem Host-Fahrzeug (12) befahren wird;
eine Positionsvorrichtung (38), die verwendet wird, um eine Position (42) des Host-Fahrzeugs (12) auf einer digitalen Karte (40) zu bestimmen; und
eine Steuervorrichtung (24) in Verbindung mit der Kamera (26) und der Positionsvorrichtung (38), wobei die Steuervorrichtung (24) konfiguriert ist zum Bestimmen eines Sichtpfads (44) basierend auf einer Fahrbahnmarkierung (32) der Fahrbahn (30), die in dem Bild (28) erfasst wird,
Betreiben des Host-Fahrzeugs (12) in Übereinstimmung mit dem Sichtpfad (44), wenn der Sichtpfad (44) der digitalen Karte (40) entspricht; **dadurch gekennzeichnet, dass** die Steuervorrichtung weiter konfiguriert ist für einen Betrieb des Host-Fahrzeugs (12) in Übereinstimmung mit einer momentanen Bewegungsbahn (50), die zuvor durch den Sichtpfad (44) definiert wurde, wenn der Sichtpfad (44) nicht der digitalen Karte (40) entspricht.

2. Das System (10) gemäß Anspruch 1, wobei der Betrieb des Host-Fahrzeugs (12) in Übereinstimmung mit der momentanen Bewegungsbahn (50) ohne Referenz zu der digitalen Karte (40) erfolgt.

3. Das System (10) gemäß Anspruch 1 oder 2, wobei der Sichtpfad (44) nicht der digitalen Karte (40) entspricht, wenn die Fahrbahnmarkierung (32) nicht erfasst wird.

4. Das System (10) gemäß einem der Ansprüche 1 bis 3, wobei die Steuervorrichtung (24) weiter konfiguriert ist für einen Betrieb des Host-Fahrzeugs (12) in Übereinstimmung mit der momentanen Bewegungsbahn (50), wenn der Sichtpfad (44) nicht der digitalen Karte (40) entspricht, bis ein Objekt (66) in einem Fahrweg (64) des Host-Fahrzeugs (12) erfasst wird.

5. Das System (10) gemäß Anspruch 4, wobei die Steuervorrichtung (24) weiter konfiguriert ist für einen Betrieb des Host-Fahrzeugs (12), um eine Kollision mit dem Objekt (66) zu vermeiden, das in dem Fahrweg (64) des Host-Fahrzeugs (12) erfasst wird.

6. Das System (10) gemäß einem der vorhergehenden Ansprüche in Kombination mit Anspruch 3, wobei die Steuervorrichtung (24) weiter konfiguriert ist zum Wiederaufnehmen eines Betriebs des Host-Fahrzeugs (12) in Übereinstimmung mit dem Sichtpfad (44), wenn eine Erfassung der Fahrbahnmarkierung (32) fortgesetzt wird.

## Revendications

1. Système d'extension de voie (10) adapté à une utilisation sur un véhicule automatisé, ledit système (10) comprenant :
une caméra (26) utilisée pour capturer une image (28) d'une route (30) parcourue par un véhicule-hôte (12) ;
un dispositif de localisation (38) utilisé pour déterminer une localisation (42) du véhicule-hôte (12) sur une carte numérique (40) ; et
un dispositif de commande (24) en communication avec la caméra (26) et le dispositif de localisation (38), ledit dispositif de commande (24) étant configuré pour
déterminer un trajet visuel (44) sur la base d'un marquage de voie (32) de la route (30) détecté dans l'image (28),
conduire le véhicule-hôte (12) selon le trajet visuel (44) lorsque le trajet visuel (44) correspond à la carte numérique (40) ;
**caractérisé en ce que**
le dispositif de commande est en outre configuré pour conduire le véhicule-hôte (12) selon une trajectoire présente (50) précédemment définie par le trajet visuel (44) lorsque le trajet visuel (44) ne correspond pas à la carte numérique (40).

2. Système (10) selon la revendication 1, dans lequel la conduite du véhicule-hôte (12) selon la trajectoire présente (50) est effectuée sans référence à la carte numérique (40).

3. Système (10) selon la revendication 1 ou 2, dans lequel le trajet visuel (44) ne correspond pas à la carte numérique (40) lorsque le marquage de voie (32) n'est pas détecté.

4. Système (10) selon l'une quelconque des revendications 1 à 3, dans lequel le dispositif de commande (24) est en outre configuré pour conduire le véhicule-hôte (12) selon la trajectoire présente (50) lorsque le trajet visuel (44) ne correspond pas à la carte numérique (40) jusqu'à ce qu'un objet (66) soit détecté dans un trajet de déplacement (64) du véhicule-hôte (12).

5. Système (10) selon la revendication 4, dans lequel le dispositif de commande (24) est en outre configuré pour conduire le véhicule-hôte (12) de façon à éviter une collision avec l'objet (66) détecté dans le trajet de déplacement (64) du véhicule-hôte (12).

6. Système (10) selon l'une quelconque des revendications précédentes en combinaison avec la revendication 3, dans lequel le dispositif de commande (24) est en outre configuré pour reprendre la conduite du véhicule-hôte (12) selon le trajet visuel (44) lorsque la détection du marquage de voie (32) reprend.
